# EUROPEAN PATENT APPLICATION

(11) **EP 1 954 089 A1**
(43) Date of publication of application: **06.08.2008**
(21) Application number: 07123937.0
(22) Date of filing: 21.12.2007
(51) Int. Cl.: H04Q 7/38

(54) **Mobile communication terminal, method for registering locatio thereof and computer readable recording medium**

(30) Priority: 01.02.2007 JP 2007023210
(71) Applicant: Fujitsu Ltd., Kawasaki-shi, Kanagawa 211-8588 (JP)
(72) Inventor: Kubo, Keijirou, Fukuoka-shi, Fukuoka 814-8588 (JP); Yano, Kazuo, Fukuoka-shi, Fukuoka 814-8588 (JP); Mori, Yasuhiro, Fukuoka-shi, Fukuoka 814-8588 (JP); Kuroki, Satoshi, Fukuoka-shi, Fukuoka 814-8588 (JP)
(74) Representative: Fenlon, Christine Lesley

(57) **Abstract**

A mobile communication terminal includes a measuring portion measuring intensity of received radio waves that are radio waves received from base stations, a selecting portion selecting one of the base stations to which a request for location registration of the mobile communication terminal should be sent, and a requesting portion sending the request to the base station selected by the selecting portion. When the request is sent, the selecting portion initially selects a first base station of the base stations whose received radio wave has the highest intensity measured by the measuring portion, and, subsequently if the location registration in accordance with the request sent to one of the base stations has failed, the selecting portion selects a second base station of the base stations whose received radio wave has intensity lower than the intensity of the received radio wave from the one of the base stations.

## Description

The present invention relates to a mobile communication terminal in a radio communication system, a method for registering location information in the mobile communication terminal and the like.

In a region such as a railway station or a downtown that is crowded with many people, a large number of mobile communication terminals (mobile units and mobile stations) are used at the same time for a radio communication system such as a mobile phone system. In such a region, compared with a non-crowded region, communication traffic is always heavy so that a large load tends to be put on a radio base station. If a large load is put on the radio base station, a mobile communication terminal located close to the radio base station may not be able to communicate.

Furthermore, many mobile communication terminals may be turned on at the same time in a facility such as a concert hall just after an event has been finished or at an arrival gate in an airport just after an airplane has arrived. Then, communication traffic may increase rapidly so that the mobile communication terminals cannot communicate.

In order to solve this problem, a countermeasure is taken to increase the number of radio base stations mainly in the region crowded with many people or in the region in which many mobile communication terminals are apt to be turned on.

However, it is necessary to make a large amount of investment for the countermeasure as well as management and maintenance after that. From a viewpoint of preserving the natural environment, it is desirable not to install too many radio base stations for saving energy.

In addition, there is a case where it is difficult to secure a space for installing additional radio base stations in the crowded region such as a city center.

Therefore, it is desirable to realize a comfortable communication service without adding so many radio base stations. As one method for realizing it, there is a method of preventing concentration of requests for registering location information (location registration) made by many mobile communication terminals with respect to the same radio base station at one time, i.e., a method of distributing the requests for location registration to many radio base stations.

Japanese unexamined patent publication No. 4-213234 describes a method of making a mobile communication terminal select a radio base station. According to this method, a mobile station (the mobile communication terminal) receives notice information from a notice channel from each radio base station and selects a radio base station having the largest number of available channels based on the received notice information.

However, the conventional method as described in Japanese unexamined patent publication No. 4-213234 may not be able to distribute requests for location registration to radio base stations appropriately if many mobile communication terminals request location registration at one time like the case just after an event has been finished or just after an airplane has arrived.

It is therefore desirable to distribute requests for location registration issued from many mobile communication terminals located in a neighborhood at the same time to radio base stations appropriately.

According to one aspect of the present invention, a mobile communication terminal for performing radio communication includes a received radio wave intensity measuring portion measuring intensity of received radio waves that are radio waves received from radio base stations, a radio base station selecting portion selecting one of the radio base stations to which a request for location registration of the mobile communication terminal should be sent, and a location registration requesting portion sending the request to the radio base station selected by the radio base station selecting portion. When the request is sent, the radio base station selecting portion initially selects a first radio base station of the radio base stations whose received radio wave has the highest intensity measured by the received radio wave intensity measuring portion, and, subsequently if the location registration in accordance with the request sent to one of the radio base stations has failed, the radio base station selecting portion selects a second radio base station of the radio base stations whose received radio wave has intensity lower than the intensity of the received radio wave from the one of the radio base stations.

According to another aspect of the present invention, a mobile communication terminal for performing radio communication includes a radio wave receiving portion receiving radio waves from radio base stations, a radio base station selecting portion selecting at random one of the radio base stations that send the radio waves received by the radio wave receiving portion, and a location registration requesting portion sending a request for location registration of the mobile communication terminal to the radio base station selected by the radio base station selecting portion.

According to the present invention, it is possible to distribute requests for location registration issued from many mobile communication terminals located in a neighborhood at the same time to radio base stations appropriately.

Reference will now be made, by way of example, to the accompanying drawings, in which:
Fig. 1 is a diagram showing an example of a general structure of a mobile phone system;
Fig. 2 is a diagram showing an example of a hardware structure of a mobile phone terminal;
Fig. 3 is a diagram showing an example of a functional structure of the mobile phone terminal;
Fig. 4 is a diagram showing an example of a registration target table;
Fig. 5 is a flowchart explaining an example of a flow of a location registration process;
Fig. 6 is a diagram showing an example of cells in a neighborhood of a facility and states of the mobile phone terminals when a mobile phone terminal is turned off;
Fig. 7 is a diagram showing an example of the cells in the neighborhood of the facility and states of the mobile phone terminals after the mobile phone terminal is turned on;
Fig. 8 is a diagram showing a variation of the functional structure of the mobile phone terminal; and
Fig. 9 is a flowchart explaining a variation of the flow of the location registration process.

The invention will now be described in detail with reference to the attached drawings.

### [First embodiment]

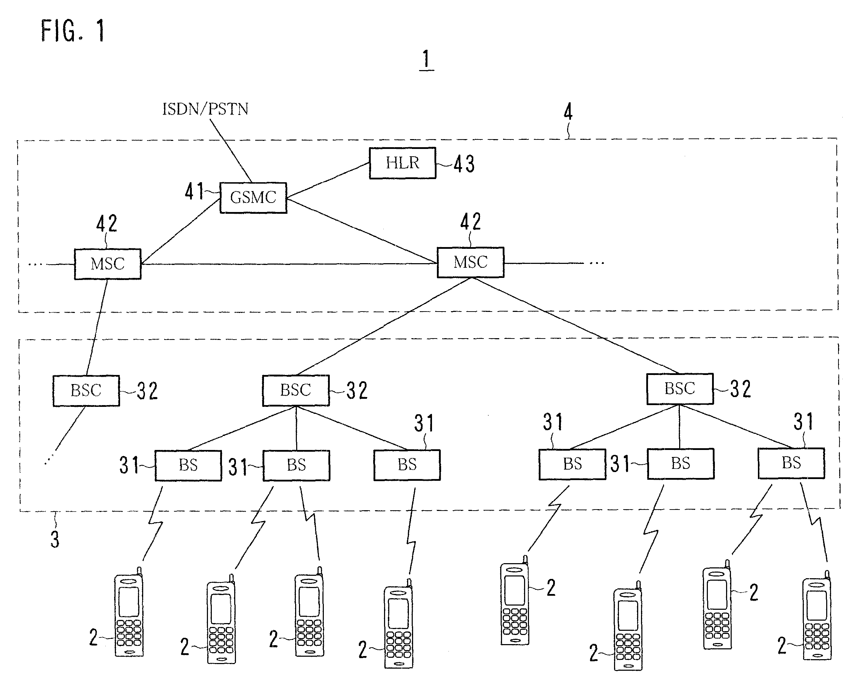

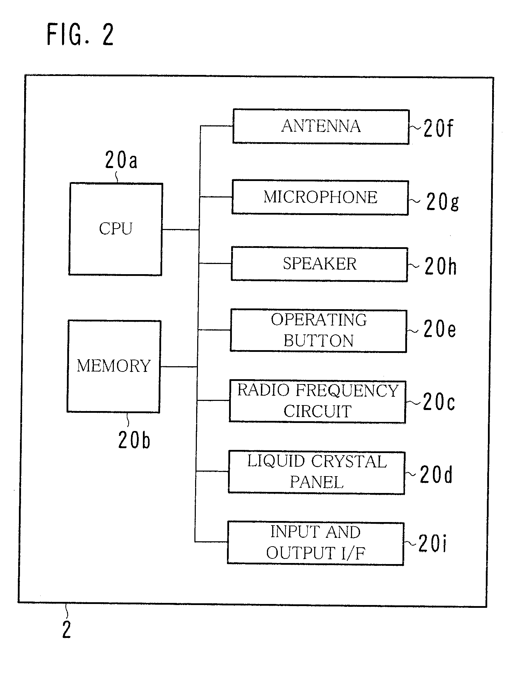

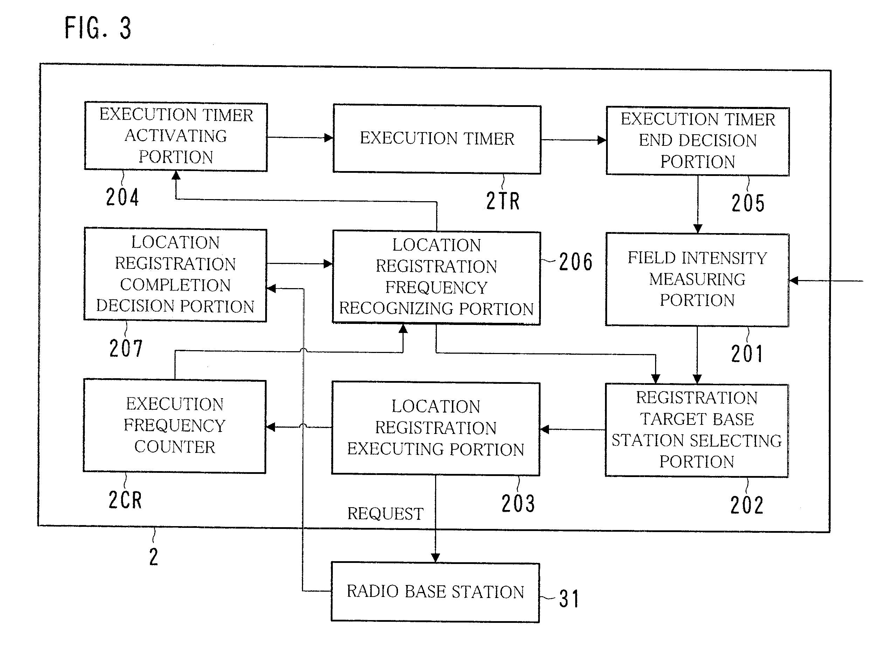

Fig. 1 is a diagram showing an example of a general structure of a mobile phone system 1, Fig. 2 is a diagram showing an example of a hardware structure of a mobile phone terminal 2, and Fig. 3 is a diagram showing an example of a functional structure of the mobile phone terminal 2.

As shown in Fig. 1, the mobile phone system 1 is a radio communication system, which is made up of the mobile phone terminals 2 according to the present invention, a radio access network (RAN) 3, a core network (CN) 4 and the like.

Structures of the radio access network 3 and the core network 4 are the same as those of the conventional system. More specifically, the radio access network 3 is made up of radio base stations (BS's) 31 and base station controllers (BSC's) 32 and the like. The core network 4 is made up of gateway mobile services switching centers (GMSC's) 41, mobile services switching centers (MSC's) 42, home location registers (HLR's) 43 and the like.

Note that the radio base station 31 may be called a "Node B" or a "base station" or the like. In addition, the base station controller 32 may be called an "RNC (Radio Network Controller)". Hereinafter, each of the radio base stations 31 may be referred to as a "radio base station 31A", a "radio base station 31B", a "radio base station 31C" or the like in a distinguishable manner.

The mobile phone terminal 2 can perform voice communication with another mobile phone terminal or a fixed telephone or perform data communication of electronic mail or image data with another mobile phone terminal or a personal computer via the radio access network 3, the core network 4 and the like in the same manner as the conventional one.

The mobile phone terminal 2 is made up of a CPU 20a, a memory 20b, a radio frequency circuit 20c, a liquid crystal panel 20d, an operating button 20e, an antenna 20f, a microphone 20g, a speaker 20h, an input and output interface 20i and the like as shown in Fig. 2. In this way, the hardware structure of the mobile phone terminal 2 is the same as the hardware structure of the conventional mobile phone terminal.

In addition, software stored in the memory 20b is also basically similar to the conventional mobile phone terminal. However, as software for selecting the radio base station 31 that relays communication with the core network 4, software for realizing the functions as shown in Fig. 3 is stored, which includes a field intensity measuring portion 201, a registration target base station selecting portion 202, a location registration executing portion 203, an execution timer activating portion 204, an execution timer end decision portion 205, a location registration frequency recognizing portion 206, a location registration completion decision portion 207, an execution frequency counter 2CR, an execution timer 2TR and the like. The software is executed by the CPU 20a.

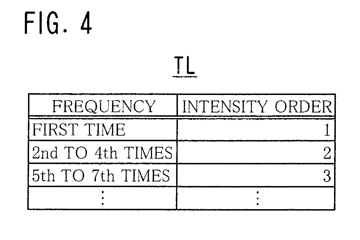

Fig. 4 is a diagram showing an example of a registration target table TL. Next, process contents performed by the individual portions of the mobile phone terminal 2 shown in Fig. 3 will be described.

The field intensity measuring portion 201 measures intensity of the radio wave received from the radio base station 31 with the antenna 20f of the mobile phone terminal 2 itself (i.e., field intensity in the mobile phone terminal 2 due to the radio wave from the radio base station 31) by the method similar to a conventional method.

More specifically, the radio base station 31 usually sends the radio wave that notifies identification information or the like of the radio base station 31 by using a predetermined frequency channel that is called a "perch channel", a "common channel" or the like. The field intensity measuring portion 201 measures field intensity due to the radio wave of the perch channel detected by the antenna 20f of the mobile phone terminal 2 itself in the same manner as a conventional method.

Hereinafter, the field intensity measured by the field intensity measuring portion 201 is referred to as "field intensity DK". In addition, the field intensity DK of the radio base station 31A, 31B, 31C and so on may be referred to as "field intensity DKa", "field intensity DKb", "field intensity DKc", and so on, respectively, in a distinguishable manner.

The location registration executing portion 203 sends a request for location registration of the mobile phone terminal 2 itself to the radio base station 31 selected by the registration target base station selecting portion 202 that will be described later.

Then, the radio base station 31 receives the request, and location information on the mobile phone terminal 2 is registered in the radio base station 31 and the upper home location register 43. After that, it can be connected to a terminal device such as another mobile phone terminal, a fixed telephone, a personal computer or the like via the core network 4 and the like for performing communication.

The registration target base station selecting portion 202 performs a process for selecting a radio base station 31 that will relay communication between the mobile phone terminal 2 itself and the core network 4, i.e., the radio base station 31 to be the registration target of the location information on the mobile phone terminal 2 itself. This process is performed based on a result of the measurement performed by the field intensity measuring portion 201 and the registration target table TL shown in Fig. 4.

Here, the registration target table TL will be described. As mentioned above in the description of background art, the conventional mobile phone terminal tries registration of location information (location registration) in the radio base station 31 related to the highest (strongest) field intensity DK, if there are a plurality of radio base stations 31 in the neighborhood. If the location registration fails, the field intensity DK of each of the radio base stations 31 is measured again after a predetermined time has passed, so that the location registration in the radio base station 31 related to the highest field intensity DK is tried.

However, the mobile phone terminal 2 according to the present embodiment does not always try the location registration in the radio base station 31 related to the highest field intensity DK but also tries the location registration in the radio base station 31 related to the second highest or lower field intensity DK in accordance with the number of tries for the location registration. As shown in Fig. 4, the registration target table TL shows the relationship between the ordinal number of a try for location registration and the ordinal number of field intensity DK. As described later, it is determined, based on the registration target table TL, which radio base station 31 with which order of field intensity DK among the radio base stations 31 should be subjected to the location registration tried by the mobile phone terminal 2.

The execution timer 2TR is a timer for adjusting a time interval between the above-mentioned tries for the location registration to a predetermined time (hereinafter referred to as "time Ta). The execution timer activating portion 204 activates (starts) the execution timer 2TR. The execution timer end decision portion 205 decides that the execution timer 2TR finished measuring the time Ta. Then, after the decision, the execution timer end decision portion 205 makes the field intensity measuring portion 201 measure the field intensity DK and makes the registration target base station selecting portion 202 select the radio base station 31 and makes the location registration executing portion 203 perform the process for the location registration.

The execution frequency counter 2CR counts the number of tries for the above-mentioned location registration. The location registration frequency recognizing portion 206 recognizes the number of times indicated in the execution frequency counter 2CR and controls the individual portions in accordance with the recognized number of times as follows. If the number of times is "2" or larger, the location registration frequency recognizing portion 206 gives instructions to the execution timer activating portion 204 so as to activate the execution timer 2TR. If the number of times is "1", the location registration frequency recognizing portion 206 does not activate the execution timer 2TR but makes the field intensity measuring portion 201 measure the field intensity DK, makes the registration target base station selecting portion 202 select the radio base station 31 and makes the location registration executing portion 203 perform the process for the location registration.

The location registration completion decision portion 207 decides whether or not the location registration in the radio base station 31 and in the home location register 43 has succeeded (has been completed).

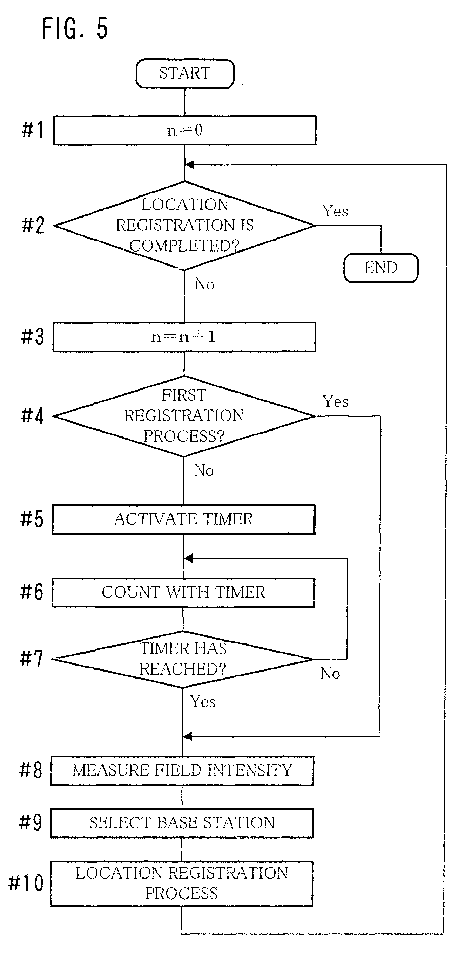

Fig. 5 is a flowchart explaining an example of a flow of the location registration process. Here, the flow of the process concerning the registration of location information performed by the mobile phone terminal 2 will be described with reference to Fig. 5.

When the mobile phone terminal 2 is powered on, the execution frequency counter 2CR is reset (#1 in Fig. 5). The location registration frequency recognizing portion 206 recognizes the number of times indicated by the execution frequency counter 2CR and controls the individual portions in accordance with the number of times. For the first time (Yes in #4), the location registration frequency recognizing portion 206 recognizes "1" and gives instructions to the field intensity measuring portion 201, the registration target base station selecting portion 202 and the location registration executing portion 203 without activating the execution timer 2TR.

Then, the field intensity measuring portion 201 measures the field intensity DK of each of the surrounding radio base stations 31 (#8). The registration target base station selecting portion 202 selects any one of the radio base stations 31 based on the registration target table TL shown in Fig. 4 (#9). Since this is the first try, the registration target base station selecting portion 202 selects the radio base station 31 related to the highest field intensity DK. Then, the location registration executing portion 203 sends a request for location registration to the radio base station 31 selected by the registration target base station selecting portion 202 (#10).

If the location registration completion decision portion 207 decides that the location registration has succeeded (Yes in #2), the series of processes shown in Fig. 5 are finished. Note that the location registration is performed with respect to the home location register 43 too, in the same manner as a conventional method.

If the location registration has failed (No in #2), the execution frequency counter 2CR counts up by "1" (#3) and the location registration is tried again. However, the retry should be performed after at least the time Ta has passed from the previous try for the location registration.

More specifically, when it is detected that the previous location registration has failed, the execution timer activating portion 204 activates the execution timer 2TR promptly (#5). If the execution timer end decision portion 205 decides that the time measured by the execution timer 2TR is beyond the time Ta (Yes in #7), the field intensity measuring portion 201 measures the field intensity DK of each of the radio base stations 31 in the neighborhood again (#8). The registration target base station selecting portion 202 selects any one of the radio base stations 31 based on the registration target table TL (#9). In the second time and after that, the radio base stations 31 related to lower field intensity DK are selected one by one. Then, the location registration executing portion 203 performs the location registration in the radio base station 31 selected by the registration target base station selecting portion 202 (#10).

Note that the execution timer 2TR is stopped and reset every time when the execution timer end decision portion 205 decides that the time Ta has passed. In addition, the activation (start) of the execution timer 2TR may be performed at timing other than the timing when it is detected that the previous location registration has failed. The execution timer 2TR may be activated during a period of time from the time point when the process of the previous location registration was started until the timing when it is detected that the previous location registration has failed.

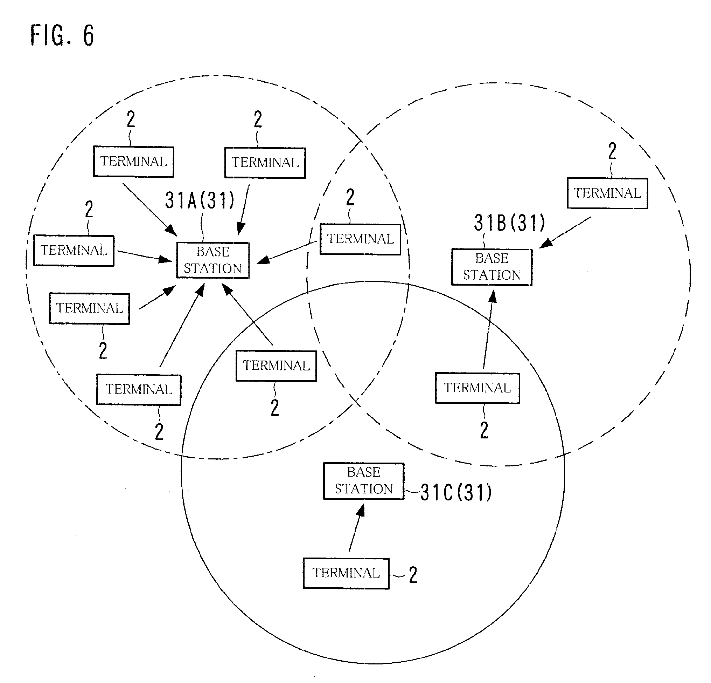

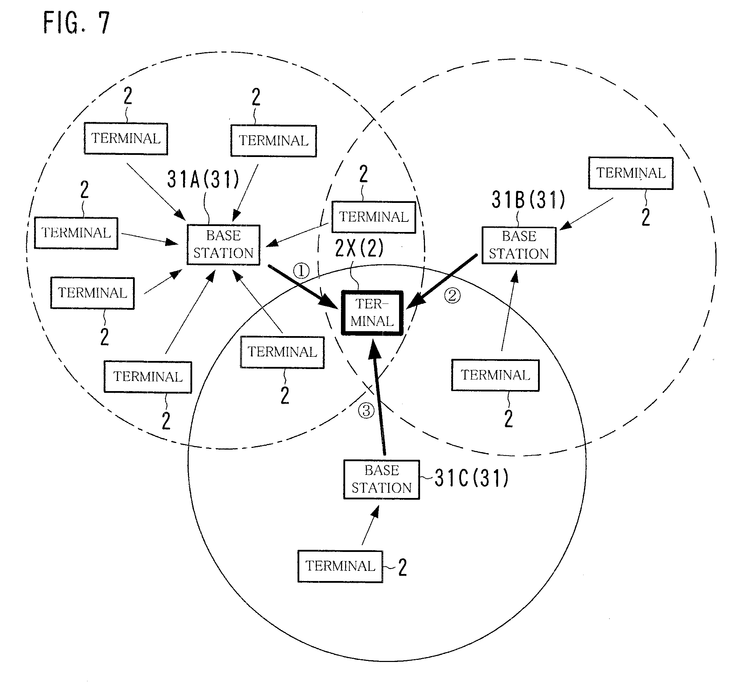

Fig. 6 is a diagram showing an example of cells in a neighborhood of a facility and states of the mobile phone terminals 2 when a mobile phone terminal 2X is turned off, and Fig. 7 is a diagram showing an example of the cells in the neighborhood of the facility and states of the mobile phone terminals 2 after the mobile phone terminal 2X is turned on.

Next, a process for the location registration of the mobile phone terminal 2X of a guest X, in the case where the mobile phone terminals 2 are powered on at the same time by guests just after an event has been finished in a facility such as a concert hall or a stadium, will be described with reference to Figs. 6 and 7.

When the event is finished so that the guests are permitted to use their mobile phone terminals, the guests will turn on their mobile phone terminals 2 at the same time. Since the guests gather in a specific area, the location registration of their mobile phone terminals 2 will be concentrated in a specific radio base station 31. In the example shown in Fig. 6, the location registration of their mobile phone terminals 2 is concentrated in the radio base station 31A.

Here, if a certain guest X turns on his or her mobile phone terminal 2 (2X) later than other guests, the mobile phone terminal 2X measures the field intensity DKa, DKb and DKc of the radio base stations 31A, 31B and 31C in the surrounding area of the mobile phone terminal 2X as shown by the circled numbers in Fig. 7. Here, suppose that values of the field intensity DKa, DKb and DKc are in descending order. Hereinafter, for the sake of a simple description, suppose that the order of values of the field intensity DK is not changed in the following description. Note that the circle of the dashed-dotted line in Fig. 7 indicates the range of the cell of the radio base station 31A, the circle of the dotted line indicates the range of the cell of the radio base station 31B, and the circle of the full line indicates the range of the cell of the radio base station 31C.

Then, the mobile phone terminal 2X first tries the location registration in the radio base station 31 related to the highest field intensity DK, i.e., the radio base station 31A based on the registration target table TL (see Fig. 4).

If the location registration in the radio base station 31A has failed, the mobile phone terminal 2X remeasures each field intensity DK and tries the location registration based on the registration target table TL. According to the registration target table TL shown in Fig. 4, the mobile phone terminal 2X tries the location registration in the radio base station 31B for the second through fourth times and tries the location registration in the location registration in the radio base station 31C for the fifth through seventh times.

According to the first embodiment, if the location registration has not succeeded, the mobile phone terminal 2 shifts the transmission target of the request for location registration one by one to the radio base station 31 that sends out a weaker radio wave. Therefore, the requests for location registration sent by many mobile phone terminals 2 located in the neighborhood can be distributed to the radio base stations 31 appropriately. Thus, reliability of the location registration can be improved.

### [Second embodiment]

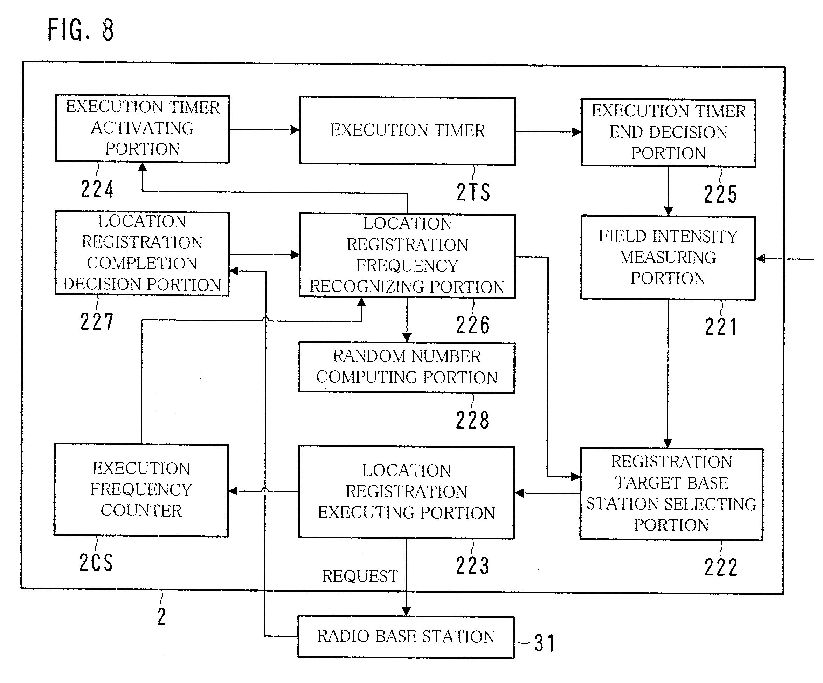

Fig. 8 is a diagram showing a variation of a functional structure of the mobile phone terminal 2.

In the first embodiment, if the mobile phone terminal 2 fails in the location registration in the radio base station 31 related to the highest field intensity DK, it shifts the transmission target of the request for location registration one by one to the radio base station 31 related to weaker field intensity DK so as to retry the location registration. In the second embodiment, the mobile phone terminal 2 tries the location registration by selecting the radio base station 31 at random.

The hardware structure of the mobile phone terminal 2 according to the second embodiment is the same as that according to the first embodiment as shown in Fig. 2. The installed software is also the same as that in the first embodiment. However, as software for selecting the radio base station 31, software is stored for realizing functions, as shown in Fig. 8, that include a field intensity measuring portion 221, a registration target base station selecting portion 222, a location registration executing portion 223, an execution timer activating portion 224, an execution timer end decision portion 225, a location registration frequency recognizing portion 226, a location registration completion decision portion 227, a random number computing portion 228, an execution frequency counter 2CS, an execution timer 2TS and the like.

The field intensity measuring portion 221, the location registration executing portion 223, the execution timer activating portion 224, the execution timer end decision portion 225, the location registration frequency recognizing portion 226, the location registration completion decision portion 227, the execution frequency counter 2CS and the execution timer 2TS perform processes similar to the processes performed by the field intensity measuring portion 201, the location registration executing portion 203, the execution timer activating portion 204, the execution timer end decision portion 205, the location registration frequency recognizing portion 206, the execution frequency counter 2CR and the execution timer 2TR, respectively, according to the first embodiment.

The random number computing portion 228 generates a random number, which is a natural number, based on the number of field intensity DK detected (measured) by the field intensity measuring portion 221, for selecting one of the radio base stations 31 that send out the radio waves that can be received by the mobile phone terminal 2 at present. More specifically, if the field intensity measuring portion 221 detects the field intensity DK from N radio base stations 31, the random number computing portion 228 generates any one of "1" to "N" (N is a natural number larger than or equal to two) as the random number. It is possible to use a current value of the execution frequency counter 2CR as one of the arguments of a function for generating the random number. It is also possible to use another particular value as the argument.

The registration target base station selecting portion 222 performs a process of selecting the radio base station 31 that relays the communication between the mobile phone terminal 2 itself and the core network 4, i.e., the radio base station 31 to be a target of the location information registration of the mobile phone terminal 2 itself, similarly to the registration target base station selecting portion 202. However, the selection method is different from that in the registration target base station selecting portion 202.

More specifically, the registration target base station selecting portion 222 selects the radio base station 31 corresponding to the random number generated by the random number computing portion 228 as the target of the location information registration. The association between the random number and the radio base station 31 may be decided as follows. For example, the random number of "1", "2", "3" and so on may be associated in the descending order of the field intensity DK. Alternatively, the random number may be associated in the ascending order of the identification information.

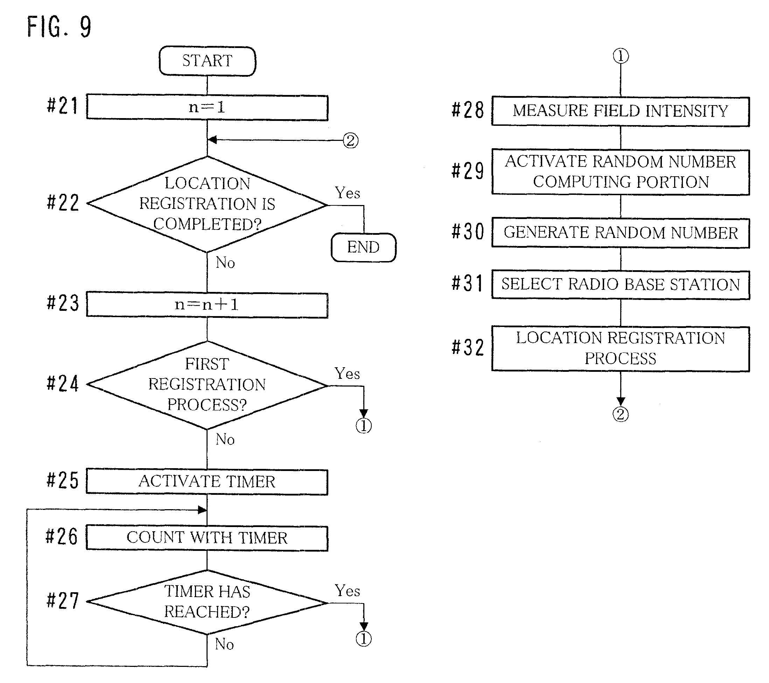

Fig. 9 is a flowchart explaining an example of a variation of the flow of the location registration process. Next, the flow of the process for the registration of location information performed by the mobile phone terminal 2 in the second embodiment will be described with reference to Fig. 9.

Contents of the process of the steps #21 to #28 are similar to the contents of the process of the steps #1 to #8 described above with reference to Fig. 5 as the first embodiment. More specifically, when the mobile phone terminal 2 is powered on, the execution frequency counter 2CS is reset (#21 in Fig. 9). The location registration frequency recognizing portion 226 recognizes the number of times indicated by the execution frequency counter 2CS and controls the individual portions in accordance with the number of times. The location registration frequency recognizing portion 226 recognizes "1" for the first time (Yes in #24) and gives instructions to the field intensity measuring portion 221, the registration target base station selecting portion 222 and the location registration executing portion 223 without activating the execution timer 2TS.

Then, the field intensity measuring portion 221 measures the field intensity DK of the radio base stations 31 in the surrounding area (#28). After the measurement, the random number computing portion 228 is activated (#29) so as to generate the random number corresponding to the number of radio base stations 31 in the surrounding area (#30). The registration target base station selecting portion 222 selects the radio base station 31 in accordance with the random number (#31). Then, the location registration executing portion 223 makes a request for location registration to the radio base station 31 selected by the registration target base station selecting portion 202 (#32).

If the location registration completion decision portion 207 decides that the location registration has succeeded (Yes in #22), the series of processes shown in Fig. 9 are finished. Note that the location registration is also performed on the home location register 43 as is with the case of the first embodiment.

If the location registration has not succeeded (No in #22), the execution frequency counter 2CS counts up by "1" (#23) and the location registration is tried again. Similarly to the first embodiment, the retry should be performed after at least time Ta has passed from the previous trial for the location registration (#25 to #27). However, in the second embodiment, the radio base station 31 for which the location registration has failed is excluded, so that one of the remaining radio base stations 31 that can perform communication is selected at random (#28 to #31). Note that it is possible to adopt another structure in which the radio base station 31 is not selected every time when location registration fails but is selected if the location registration has not succeeded after a predetermined number of times of tries.

According to the second embodiment, the mobile phone terminal 2 selects the radio base station 31 to be a target of transmission of the request for location registration at random. Therefore, the requests for location registration issued by many mobile phone terminals 2 located in the neighborhood at the same time can be distributed to the radio base stations 31 appropriately.

Although the radio base station 31 is selected at random from the first time for the process of the location registration in the second embodiment, it is possible to adopt another structure in which the radio base station 31 related to the highest field intensity DK is selected for performing the process of the location registration similarly to the first embodiment, and if the location registration has failed, one of the remaining radio base stations 31 is selected at random for performing the process of the location registration.

In the first and the second embodiments, it is desirable that the registration target base station selecting portions 202 and 222 do not regard every radio base station 31 related to the field intensity DK measured by the field intensity measuring portions 201 and 221 as a candidate for selection but exclude the radio base station 31 related to weak field intensity DK lower than a predetermined value from the candidates.

Although the first and the second embodiments exemplify the mobile phone terminals 2 (mobile stations) that are used in the radio communication system, the present invention can also be applied to mobile stations of other radio communication systems such as mobile stations of a so-called wireless LAN or mobile stations for PHS.

Other than that, the structure of the entire or the individual portions of the mobile phone system 1 or the mobile phone terminal 2, the process contents, the process order, the structure of the registration target table TL and the like can be modified variously in accordance with the spirit of the present invention.

While example embodiments of the present invention have been shown and described, it will be understood that the present invention is not limited thereto, and that various changes and modifications may be made by those skilled in the art without departing from the scope of the invention as set forth in the appended claims and their equivalents, as interpreted by the description and drawings.

## Claims

1. A mobile communication terminal (2) for performing radio communication, **characterized by**:
a received radio wave intensity measuring portion (201) measuring intensity of received radio waves that are radio waves received from radio base stations (31);
a radio base station selecting portion (202) selecting one of the radio base stations (31) to which a request for location registration of the mobile communication terminal (2) should be sent; and
a location registration requesting portion (203) sending the request to the radio base station (31) selected by the radio base station selecting portion (202), wherein
when the request is sent, the radio base station selecting portion (202) initially selects a first radio base station (31) of the radio base stations whose received radio wave has the highest intensity measured by the received radio wave intensity measuring portion (201), and, subsequently if the location registration in accordance with the request sent to one of the radio base stations (31) has failed, the radio base station selecting portion (202) selects a second radio base station (31) of the radio base stations whose received radio wave has intensity lower than the intensity of the received radio wave from the one of the radio base stations (31).

2. A mobile communication terminal (2) for performing radio communication, **characterized by**:
a radio wave receiving portion (20f) receiving radio waves from radio base stations (31);
a radio base station selecting portion (222) selecting at random one of the radio base stations (31) that send the radio waves received by the radio wave receiving portion (20f); and
a location registration requesting portion (223) sending a request for location registration of the mobile communication terminal (2) to the radio base station (31) selected by the radio base station selecting portion (222).

3. The mobile communication terminal (2) according to claim 2, **characterized in that** if the location registration in accordance with the request sent to one of the radio base stations (31) has failed, the radio base station selecting portion (222) excludes the radio base station (31) and selects another one of the radio base stations (31) that sends the radio wave received by the radio wave receiving portion (20f).

4. The mobile communication terminal (2) according to claim 3, further **characterized by** a received radio wave intensity measuring portion (221) measuring intensity of radio waves received from the radio base stations (31),
wherein the radio base station selecting portion (222) excludes, from a target to be selected, such a radio base station (31) that sends a radio wave whose intensity measured by the received radio wave intensity measuring portion (221) is lower than a predetermined value.

5. A mobile communication terminal (2) for performing radio communication, **characterized by**:
a received radio wave intensity measuring portion (221) measuring intensity of received radio waves that are radio waves received from radio base stations (31);
a radio base station selecting portion (222) selecting one of the radio base stations (31) to which a request for location registration of the mobile communication terminal (2) should be sent; and
a location registration requesting portion (223) sending a request for location registration of the mobile communication terminal (2) to the radio base station (31) selected by the radio base station selecting portion (222), wherein
when the request is sent, the radio base station selecting portion (222) initially selects a first radio base station (31) whose received radio wave has the highest intensity measured by the received radio wave intensity measuring portion (221) from among the radio base stations (31), and subsequently if the location registration in accordance with the request has failed, the radio base station selecting portion (222) selects at random one of radio base stations (31) whose received radio wave has the second highest or lower intensity measured by the received radio wave intensity measuring portion (221) from among the radio base stations (31).

6. A method for registering a location of a mobile communication terminal (2) for performing radio communication, **characterized by**:
making the mobile communication terminal (2) send a request for location registration of the mobile communication terminal (2) to a radio base station (31) for sending a radio wave with the highest intensity among radio waves received by the mobile communication terminal (2); and
if the location registration has failed, making the mobile communication terminal (2) resend the request to another radio base station (31) that sends a radio wave with the second highest or lower intensity among the radio waves received by the mobile communication terminal (2).

7. A method for registering a location of a mobile communication terminal (2) for performing radio communication, **characterized by**:
making the mobile communication terminal (2) receive radio waves from radio base stations (31);
making the mobile communication terminal (2) select at random one of the radio base stations (31) from which the radio waves received by the mobile communication terminal (2) have been sent; and
making the mobile communication terminal (2) send a request for location registration of the mobile communication terminal (2) to the selected radio base station (31).

8. A computer readable recording medium for storing a computer program for use in a computer controlling a mobile communication terminal (2) for performing radio communication, the computer program making the mobile communication terminal (2) perform a process comprising:
sending a request for location registration of the mobile communication terminal (2) to a radio base station (31) that sends a radio wave with the highest intensity among radio waves received by the mobile communication terminal (2); and
if the location registration has failed, resending the request to a radio base station (31) that sends another radio wave with the second highest or lower intensity among the radio waves received by the mobile communication terminal (2).

9. A computer readable recording medium for storing a computer program for use in a computer controlling a mobile communication terminal (2) for performing radio communication, the computer program making the mobile communication terminal (2) perform a process comprising:
selecting at random one of radio base stations (31) that send radio waves that are received; and
sending a request for location registration of the mobile communication terminal (2) to the selected radio base station (31).
